# EUROPEAN PATENT APPLICATION

(11) **EP 3 943 562 A1**
(43) Date of publication of application: **26.01.2022**
(21) Application number: 20774689.2
(22) Date of filing: 05.02.2020
(51) Int. Cl.: C09D 133/04, C09D 167/00, C09D 7/63

(54) **COATING COMPOSITION**

(30) Priority: 18.03.2019 JP 2019049238
(71) Applicant: Osaka Soda Co., Ltd., Osaka-shi Osaka 550-0011 (JP)
(72) Inventor: UMAKOSHI, Hideaki, Osaka-shi, Osaka 550-0011 (JP)
(74) Representative: Müller-Boré & Partner Patentanwälte PartG mbB
(86) International application number: PCT/JP2020/004346
(87) International publication number: WO 2020/189066

(57) **Abstract**

An object of the present invention is to provide a coating composition that imparts excellent substrate adhesion and excellent processability to a cured coating film obtained by curing the coating composition. There is provided a coating composition comprising a base resin (A) and a polyester resin (B), wherein the polyester resin (B) contains a structural unit (b-1) derived from a polybasic acid and a structural unit (b-2) derived from a polyhydric alcohol, the structural unit (b-1) derived from a polyhydric alcohol contains 20 mol% or more and 100 mol% or less of a structural unit derived from hydrogenated bisphenol A, and the polyester resin (B) has a number average molecular weight of 500 to 4,500 and an acid value of 5 to 300.

## Description

### Technical Field

The present invention relates to a coating composition and a cured product obtained by curing the composition with heat or an active energy ray.

### Background Art

Coating compositions, also named as inks, varnishes, or paints, are applied directly to substrates such as metals, inorganic materials (e.g., glass), plastics, or paper, or applied to printed surfaces for the purpose of protecting or decorating the surface layer region.

Coating compositions contain organic monomers, organic polymers, solvents, polymerization initiators, and colorants, and may contain inorganic fillers and various additives for the purpose of adjusting the coating film function. Some coating compositions do not contain organic polymers or solvents, in consideration of the production process or functionality.

Coating compositions are generally cured with heat or an active energy ray (typically ultraviolet ray). Some are cured using heat and an active energy ray in combination, while some are naturally dried at room temperature. When a coating composition is cured with an active energy ray only, the composition preferably does not contain a solvent.

Substrates coated with a coating composition may then be stamped or bent into desired shapes, such as containers, displays, or building materials. In this case, if the adhesion between the coating film and the underlying substrate is poor, the coating film may peel off, or crack if the coating film itself is brittle.

Patent Literature 1 discloses coating a steel sheet with three different films laminated in layers in an attempt to impart substrate adhesion and processing resistance. While such a laminated film is effective, it involves disadvantages in terms of production process, such as increased tact time or increased cost due to too many process steps, and increased film thickness.

Patent Literature 2 discloses coating a plastic substrate with a siloxane-based coating composition in an attempt to impart substrate adhesion and processing resistance. However, a coating film formed using the siloxane-based composition disclosed in Patent Literature 2 tends to be hard, and has the problem of easily cracking and chipping upon curing of the coating film.

### Citation List

### Patent Literature

Patent Literature 1: Japanese Patent No. 6030322
Patent Literature 2: JP H11-43646 A

### Summary of Invention

### Technical Problem

It is an object of the present invention to provide a coating composition that imparts excellent substrate adhesion and excellent processability to a cured coating film obtained by curing the coating composition.

### Solution to Problem

As a result of extensive research, the present inventor has found as a solution to the aforementioned problem that a coating composition containing a polyester resin with a specific structure has excellent substrate adhesion with the coating film and excellent processability.

The present invention can be summarized as follows:
The inventor has found that excellent substrate adhesion and processability required for a cured coating film are achieved by:
a coating composition comprising a base resin (A) and a polyester resin (B), wherein
the polyester resin (B) contains a structural unit (b-1) derived from a polybasic acid and a structural unit (b-2) derived from a polyhydric alcohol,
the structural unit (b-2) derived from a polyhydric alcohol contains 20 mol% or more and 100 mol% or less of a structural unit derived from hydrogenated bisphenol A, and
the polyester resin (B) has a number average molecular weight of 500 to 4,500 and an acid value of 5 to 300,
thus completing the present invention.

### Advantageous Effects of Invention

A coating film obtained by applying the coating composition of the present invention to a substrate and curing the coating composition with heat or an active energy ray exhibits high adhesion to a metal or plastic substrate. Moreover, the coating film is less likely to crack and exhibits high processability when the substrate is processed. The coating composition of the present invention is also suitable for use as, for example, an ink for lithographic printing (offset printing).

### Description of Embodiments

The coating composition of the present invention will be hereinafter described in detail.

### Coating Composition

The coating composition of the present invention contains a base resin (A) and a polyester resin (B). The polyester resin (B) contains a structural unit (b-1) derived from a polybasic acid and a structural unit (b-2) derived from a polyhydric alcohol, and also optionally contains a polymerization initiator (C). The coating composition may additionally contain organic monomers, organic polymers, solvents, colorants, and the like. Furthermore, the coating film properties can be adjusted using inorganic fillers and various additives.

### Base Resin (A)

The base resin (A) contained in the coating composition of the present invention is a curable resin or a curable composition, for example, a thermosetting resin or an active energy ray-curable composition. Specific examples of the base resin (A) include an alkyd resin (a-1), which is a thermosetting resin, and an acrylate composition (a-2), which is an active energy ray-curable composition. These base resins (A) may be used alone or in combination.

The base resin (A) is not limited as long as it can be cured with heat or an active energy ray; examples include the alkyd resin (a-1) and the acrylate composition (a-2).

Examples of the alkyd resin (a-1) include phthalic acid-based alkyd resins, rosin-modified alkyd resins, oil-modified alkyd resins, fatty acid-modified alkyd resins, phenol-modified alkyd resins, urethane-modified alkyd resins, styrene-modified alkyd resins, acrylic-modified alkyd resins, and vinyl toluene-modified alkyd resins. One or a plurality of the above may be used. In particular, in view of compatibility with the polyester resin (B), preferred are phthalic acid-based alkyd resins, rosin-modified alkyd resins, oil-modified alkyd resins, and fatty acid-modified alkyd resins, and more preferred are oil-modified alkyd resins, fatty acid-modified alkyd resins, and phthalic acid-based alkyd resins. It should be noted that the alkyd resin (a-1) does not include the below-described polyester resin (B).

The acrylate composition (a-2) is a composition containing any of the below-described acrylates and/or a polymer thereof. The acrylate composition (a-2) is preferably any of the below-described acrylates and/or a polymer thereof. The polymer may be a polymer obtained by polymerizing one of the below-described acrylates alone, or a copolymer obtained by polymerizing a combination of a plurality of the below-described acrylates. The combination of the structural units of the copolymer can be appropriately selected. When an acrylate and a polymer thereof are used, the ratio between them can be appropriately selected. For example, when an acrylate and a polymer are used in combination, the ratio of the acrylate to the polymer may be in the range of 10:90 to 10:90, preferably in the range of 20:80 to 80:20.

Examples of acrylates that can be used in the acrylate composition (a-2) include (meth)acrylic acid ester compounds of alcohols such as pentaerythritol, dipentaerythritol, trimethylolpropane, ditrimethylolpropane, neopentyl glycol, 1,6-hexanediol, glycerin, polyethylene glycol, propylene, dipropylene, dipropylene glycol, and polypropylene glycol, as well as (meth)acrylic acid ester compounds obtained by adding alkylene oxides such as ethylene oxide and propylene oxide to these (meth)acrylic acid ester compounds; (meth)acrylic acid ester compounds obtained by adding alkylene oxides such as ethylene oxide and propylene oxide to bisphenols such as bisphenol A and bisphenol F; (meth)acrylic acid ester compounds such as epoxy (meth)acrylates, urethane (meth)acrylates, and alkyd (meth)acrylates; and (meth)acrylic acid ester compounds such as epoxidized soybean oil acrylates. Preferred are (meth)acrylic acid ester compounds of alcohols such as pentaerythritol, dipentaerythritol, trimethylolpropane, ditrimethylolpropane, neopentyl glycol, 1,6-hexanediol, glycerin, polyethylene glycol, propylene, dipropylene, dipropylene glycol, and polypropylene glycol, as well as (meth)acrylic acid ester compounds obtained by adding alkylene oxides such as ethylene oxide and propylene oxide to these (meth)acrylic acid ester compounds, and more preferred are (meth)acrylic acid ester compounds of alcohols such as pentaerythritol, dipentaerythritol, trimethylolpropane, dipropylene, ditrimethylolpropane, and dipropylene glycol, as well as (meth)acrylic acid ester compounds obtained by adding alkylene oxides such as ethylene oxide and propylene oxide to these (meth)acrylic acid ester compounds.

The following acrylates can also be used. Specific examples include isobornyl acrylate, 4-hydroxybutyl acrylate, lauryl acrylate, 2-methoxyethyl acrylate, phenoxyethyl acrylate, isooctyl acrylate, stearyl acrylate, cyclohexyl acrylate, 2 - ethoxyethyl acrylate, benzyl acrylate, 1H,1H,5H-octafluoropentyl acrylate, 2-hydroxyethyl acrylate, 2-hydroxypropyl acrylate, methyl acrylate, methyl methacrylate, butyl acrylate, isobutyl acrylate, t-butyl acrylate, methyl acrylate, tetrahydrofurfuryl acrylate, ethyl carbitol acrylate, 2,2,2-trifluoroethyl acrylate, 2,2,3,3-tetrafluoropropyl acrylate, methoxytriethylene glycol acrylate, propylene oxide-modified nonylphenol acrylate, ethylene oxide-modified nonylphenol acrylate, ethylene oxide-modified 2-ethylhexyl acrylate, phenyl glycidyl ether acrylate, phenoxydiethylene glycol acrylate, ethylene oxide-modified phenol acrylate, ethylene oxide-modified cresol acrylate, methoxypolyethylene glycol acrylate, dipropylene glycol acrylate, dicyclopentenyl acrylate, dicyclopentenyloxyethyl acrylate, 2-n-butyl-2-ethyl-1,3-propanediol diacrylate, tripropylene glycol diacrylate, tetraethylene glycol diacrylate, 1,9-nonanediol diacrylate, 1,4-butanediol diacrylate, bisphenol A-ethylene oxide-modified diacrylate, 1,6-hexanediol diacrylate, polyethylene glycol 200 diacrylate, neopentyl glycol hydroxypivalate diacrylate, 2-ethyl-2-butyl-propanediol diacrylate, polypropylene glycol diacrylate, propylene oxide-modified bisphenol A diacrylate, ethylene oxide-modified hydrogenated bisphenol A diacrylate, dipropylene glycol diacrylate, dipropylene diacrylate, polypropylene glycol diacrylate, trimethylolpropane triacrylate, trimethylolpropane tetraacrylate, ditrimethylolpropane tetraacrylate, pentaerythritol triacrylate, trimethylolpropane ethylene oxide-modified triacrylate, glycerin propylene oxide adduct of triacrylate, trisacryloyloxyethyl phosphate, pentaerythritol tetraacrylate, propylene oxide-modified trimethylolpropane triacrylate, γ-butyrolactone acrylate, pentamethyl piperidyl acrylate, tetramethyl piperidyl acrylate, 2-methyl-2-adamantyl acrylate, 2-ethyl-2-adamantyl acrylate, mevalonic lactone acrylate, dimethylol tricyclodecane diacrylate, 2-(2-vinyloxyethoxy)ethyl acrylate, 1-adamantylmethyl acrylate, 1-adamantyl acrylate, 2-acryloyloxy ethyl phthalate, 3-acryloyloxy propyl acrylate, dicyclopentanyl acrylate, 2-hydroxy-3-phenoxypropyl acrylate, aliphatic urethane acrylates, alicyclic urethane acrylates, aromatic urethane acrylates, aliphatic epoxy acrylates, aliphatic epoxy acrylates, aromatic epoxy acrylates, and other monomers as well as copolymers thereof. One or a plurality of the above may be used.

In particular, preferred is one or more selected from isobornyl acrylate, phenoxyethyl acrylate, 1,9-nonanediol diacrylate, 1,6-hexanediol diacrylate, trimethylolpropane triacrylate, pentaerythritol triacrylate, butyl acrylate-methyl methacrylate copolymer, butyl acrylate-glycidyl methacrylate copolymer, ethyl acrylate-glycidyl methacrylate-2-hydroxyethyl methacrylate copolymer, ditrimethylolpropane tetraacrylate, aromatic urethane acrylates, /(ethylene oxide) - modified hydrogenated bisphenol A diacrylate, pentaerythritol triacrylate, pentaerythritol tetraacrylate, dipropylene diacrylate, trimethylolpropane tetraacrylate, and 1,6-hexanediol diacrylate.

The coating composition of the present invention may contain 5 to 50% by weight, preferably 10 to 50% by weight, more preferably 10 to 40% by weight, even more preferably 20 to 40% by weight of the base resin (A), based on the total amount of the coating composition.

### Polyester Resin (B)

The polyester resin (B) of the present invention contains a structural unit (b-1) derived from a polybasic acid and a structural unit (b-2) derived from a polyhydric alcohol. The structural unit (b-2) derived from a polyhydric alcohol contains 20 mol% or more and 100 mol% or less of a structural unit derived from hydrogenated bisphenol A. That is, the polyester resin (B) contains 20 mol% or more and 100 mol% or less of the structural unit derived from hydrogenated bisphenol A, based on the total content of the structural unit (b-2) derived from a polyhydric alcohol. Furthermore, the polyester resin (B) has a number average molecular weight of 500 to 4,500 and an acid value of 5 to 300.

The polyester resin (B) contained in the coating composition of the present invention is a reaction product obtained by reacting a dibasic or higher polybasic acid with a dihydric or higher polyhydric alcohol. The polybasic acid may be an acid anhydride thereof. A single polybasic acid may be used, or two or more polybasic acids may be used in combination.

### Structural Unit (b-1) Derived from Polybasic Acid

The structural unit (b-1) derived from a polybasic acid may, for example, be an unsaturated polybasic acid or a saturated polybasic acid.

The unsaturated polybasic acid is not limited, and may be a known one. Examples of unsaturated polybasic acids include maleic anhydride, fumaric acid, citraconic acid, and itaconic acid. These unsaturated polybasic acids may be used alone or in combination.

The saturated polybasic acid is not limited, and may be a known one. Examples of saturated polybasic acids include structural units derived from succinic acid, glutaric acid, maleic acid, maleic anhydride, chloromaleic acid, mesaconic acid, adipic acid, dodecanedioic acid, hexahydrophthalic anhydride, tetrahydrophthalic anhydride, orthophthalic acid, isophthalic acid, terephthalic acid, and the like. In particular, structural units derived from hexahydrophthalic anhydride, tetrahydrophthalic anhydride, orthophthalic acid, isophthalic acid, and terephthalic acid are preferred, and structural units derived from hexahydrophthalic anhydride and tetrahydrophthalic anhydride are more preferred.

### Structural Unit (b-2) Derived from Polyhydric Alcohol

The structural unit (b-2) derived from a polyhydric alcohol of the present invention contains at least a structural unit derived from hydrogenated bisphenol A. Hydrogenated bisphenol A may be used alone or in combination with another polyhydric alcohol. Examples of polyhydric alcohols that may be used in combination include ethylene glycol, 1,2-propylene glycol, 1,3-propanediol, 2-methyl-1,3-propanediol, 1,2-butanediol, 1,3-butanediol, 1,4-butanediol, 1,5-pentanediol, 1,6-hexanediol, 3-methyl-1,5-pentanediol, neopentyl glycol, diethylene glycol, dipropylene glycol, triethylene glycol, 1,9-nonanediol, 2-methyloctanediol, glycerin, 1,10-decanediol, bisphenol A, bisphenol F, and hydrogenated bisphenol F.

In particular, 1,3-butanediol, 1,4-butanediol, and dipropylene glycol are preferred.

In the structural unit (b-2) derived from a polyhydric alcohol, the content of the structural unit derived from hydrogenated bisphenol A may be in the range of 20 mol% or more and 100 mol% (e.g., 20 mol% or more and 100 mol%; 20 mol% or more and 95 mol% or less; 20 mol% or more and 80% mol% or less; or 20 mol% or more and 70 mol% or less), based on the total content of the structural unit derived from a polyhydric alcohol. When the structural unit derived from hydrogenated bisphenol A is in the above-mentioned range, a coating composition having excellent substrate adhesion and processing resistance can be obtained. In particular, the content of the structural unit derived from hydrogenated bisphenol A in the structural unit (b-2) derived from a polyhydric alcohol is preferably 20 mol% or more and 100 mol% or less, 50 mol% or more and 100 mol% or less, 80 mol% or more and 100 mol% or less, 90 mol% or more and 100 mol% or less, 99 mol% or more and 100 mol% or less, or 100 mol%.

The number average molecular weight (Mn) of the polyester resin (B) is preferably 500 to 4,500, more preferably 500 to 3,000, even more preferably 800 to 3,000, particularly preferably 800 to 2,500, and more particularly preferably 800 to 2,000. The weight average molecular weight (Mw) of the polyester resin is not limited, but is preferably 500 to 5,000, and more preferably 800 to 3,000. If the molecular weight is low, the coating composition after the addition of the polyester resin will not adhere to metals or plastics, whereas if the molecular weight is high, the compatibility with the base resin or the solvent will be poor. As used herein, "number average molecular weight" and "weight average molecular weight" are each determined by measuring them at 40°C using gel permeation chromatography (Prominence-i, LC-2030 manufactured by Shimadzu Corporation), and using a standard polystyrene calibration curve.

The acid value of the polyester resin (B) may be 5 to 300, preferably 5 to 200, more preferably 10 to 200, and even more preferably 10 to 170. If the acid value is low, the coating composition after the addition of the resin will not adhere to metals or plastics as substrates, whereas if the acid value is high, the stability of the composition will deteriorate, leading to, for example, separation of the polyester resin in the coating composition.

The polyester resin (B) may be synthesized by a known method, using raw materials as described above. Various conditions for the synthesis need to be selected appropriately, according to the raw materials to be used and the amounts thereof. In this reaction, a catalyst may be used, as required. Examples of catalysts include known catalysts, such as manganese acetate, dibutyl tin oxide, stannous oxalate, zinc acetate, and cobalt acetate. These catalysts may be used alone or in combination. The reaction temperature is preferably in the range of 150 to 220°C, more preferably 170 to 200°C, in order to give an optimal reaction rate and yield.

The order of adding the raw materials to obtain the polyester resin (B) of the present invention may be adjusted appropriately, according to the polyester resin (B) having an intended structure. For example, when two polybasic acids and two polyhydric alcohols are used, the two polybasic acids and two polyhydric alcohols may be added all at once and reacted. Alternatively, a polyester resin having a terminal structure different from internal structural units may be obtained by adjusting the molar ratio of the reaction composition of a polybasic acid and a single polyhydric alcohol to 1:2 or 2:1, and conducting a first-step reaction, and thereafter, adding, as appropriate, another polybasic acid or polyhydric alcohol that determines the terminal structure, and conducting a second-step reaction.

The reaction is preferably conducted in an inert gas atmosphere, such as nitrogen or argon. The reaction may be conducted under atmospheric pressure or under pressure, preferably under atmospheric pressure in view of ease of operation. The reaction may be conducted by charging a reactor equipped with an impeller with the raw materials all at once or in divided portions, and reacting them at the above-mentioned predetermined temperature.

The coating composition of the present invention preferably contains the polyester resin (B) in an amount of 10 to 100 parts by mass, more preferably 20 to 90 parts by mass, even more preferably 30 to 90 parts by mass, particularly preferably 30 to 80 parts by mass, and more particularly preferably 20 to 80 parts by mass, per 100 parts by mass of the base resin (A).

### Polymerization Initiator (C)

The coating composition of the present invention optionally contains a polymerization initiator (C). The polymerization initiator (C) can be herein used without limitation. The polymerization initiator (C) is added to cure the base resin (A), and may be an appropriate polymerization initiator depending on the method of curing. For example, for curing with heat, a heat-curing polymerization initiator (c-1) may be used, and for curing with active energy ray irradiation, an active energy ray-curing polymerization initiator (c-2) may be used.

Preferred examples of heat-curing polymerization initiators (c-1) include, but are not limited to, peroxide compounds and azo compounds; specifically, diacyl peroxides, such as benzoyl peroxide and lauroyl peroxide; dialkyl peroxides, such as dicumyl peroxide and di-tert-butyl peroxide; peroxycarbonates, such as diisopropyl peroxydicarbonate and bis(4-tert-butylcyclohexyl) peroxydicarbonate; peroxide compounds, such as tert-butyl peroxyoctoate, tert-butyl peroxybenzoate, and other alkyl peresters; azo compounds, such as 1,1'-azobicyclohexane-1-carbonitrile, 2,2'-azobis-(2,4-dimethylvaleronitrile), 2,2'-azobis-(4-methoxy-2,4-dimethylvaleronitrile) 2,2'-azobis-(methylisobutyrate), α,α-azobis-(isobutyronitrile), and 4 4'-azobis-(4-cyanovaleric acid). These heat-curing polymerization initiators may be used alone or in combination.

Examples of active energy ray-curing polymerization initiators (c-2) include, but are not limited to, benzoins and benzoin alkyl ethers, such as benzyl, benzoin methyl ether, benzoin ethyl ether, benzoin n-propyl ether, benzoin isopropyl ether, and benzoin n-butyl ether; benzophenones, such as benzophenone, p-methylbenzophenone, Michler's ketone, methylbenzophenone, 4,4'-dichlorobenzophenone, and 4,4'-bisdiethylaminobenzophenone; acetophenones, such as acetophenone, 2,2-dimethoxy-2-phenylacetophenone, 2,2-diethoxy-2-phenylacetophenone, 1,1-dichloroacetophenone, 1-hydroxy-cyclohexyl-phenyl ketone, 2-methyl-1-[4-(methylthio)phenyl]-2-morpholino-1-propanone, 2-benzyl-2-dimethylamino-1-(4-morpholinophenyl)-butanone-1, and N,N-dimethylaminoacetophenone; thioxanthones, such as 2,4-dimethylthioxanthone, 2,4-diethylthioxanthone, 2-chlorothioxanthone, and 2,4-diisopropylthioxanthone; anthraquinones, such as anthraquinone, chloroanthraquinone, 2-methylanthraquinone, 2-ethylanthraquinone, 2-tert-butylanthraquinone, 1-chloroanthraquinone, 2-amylanthraquinone, and 2-aminoanthraquinone; ketals, such as acetophenone dimethyl ketal and benzyl dimethyl ketal; oxime esters, such as 1.2-octanedione, 1-[4-(phenylthio)-, 2-(O-benzoyloxime)], ethanone, 1-[9-ethyl-6-(2-methylbenzoyl)-9H-carbazol-3-yl]-, 1-(O-acetyloxime); acylphosphines, such as 2,4,6-trimethylbenzoyl diphenyl phosphine oxide and bis(2,4,6-trimethylbenzoyl)-phenylphosphine oxide; phenyldisulfide 2-nitrofluorene, butyroin, anisoisoethyl ether, and azobisisobutyronitrile. In particular, preferred are acetophenones, acylphosphine oxides, oxyphenyls, oxime esters, and benzoins, and more preferred are acetophenones. These active energy ray-curing polymerization initiators (c-2) may be used alone or in combination.

The amount of the polymerization initiator to be used in the coating composition of the present invention is preferably 0.1 to 20 parts by weight, more preferably 1 to 15 parts by weight, even more preferably 5 to 13 parts by weight, and particularly preferably 5 to 10 parts by weight, based on a total of 100 parts by weight of the base resin (A) and the polyester resin (B).

When an active energy ray-curing polymerization initiator (C-2) is used as the polymerization initiator (C), it may be used in combination with sensitizers. Examples of sensitizers include anthracene, phenothiazine, perylene, thioxanthone, and benzophenone thioxanthone. Moreover, when an active energy ray-curing polymerization initiator is used, it may be added in advance to the acrylate composition used as the base resin.

When a heat-curing polymerization initiator (C-1) is used as the polymerization initiator (C), it may be optionally used in combination with metal soaps, metal chelates, and amines as accelerators. Examples include metal soaps such as cobalt naphthenate, cobalt octylate, zinc octylate, vanadium octylate, copper naphthenate, and barium naphthenate; metal chelates such as vanadium acetylacetate, cobalt acetylacetate, and iron acetylacetonate; and amines such as N,N-substituted-p-toluidine and 4-(N,N-substituted amino) benzaldehyde.

The coating composition of the present invention optionally contains a solvent. The solvent can be used without limitation. The solvent is mainly used to enhance the compatibility of the base resin (A) and the polyester resin (B), and adjust the viscosity of the coating composition according to the coating method. The amount of the solvent to be added to the coating composition is 50 to 200 parts by weight based on a total of 100 parts by weight of the base resin (A) and the polyester resin (B). While the solvent is not essential in the coating composition of the present invention, the coating composition may contain a solvent in view of operation efficiency during application.

Preferred solvents are organic solvents that can dissolve polyester resins, for example, ketones, esters, glycol ethers, and hydrocarbons. Examples of ketones include alkyl ketones with 3 to 12 carbon atoms, such as acetone, methyl ethyl ketone, methyl amyl ketone, methyl isobutyl ketone, ethyl isobutyl ketone, diisobutyl ketone, cyclohexanone, diacetone alcohol, isophorone, and γ-butyrolactone. Preferred esters include esters with 2 to 12 carbon atoms, such as methyl acetate, ethyl acetate, propyl acetate, isobutyl acetate, butyl acetate, tertiary butyl acetate, isoamyl acetate, propylene glycol monomethyl ether acetate, propylene glycol monomethyl ether propionate, and ethylene glycol acetate. Examples of glycol ethers include propylene glycol monomethyl ether, methyl cellosolve, ethyl cellosolve, butyl cellosolve, diethylene glycol monobutyl ether, and ethylene glycol monopropyl ether. Examples of hydrocarbons include aromatic hydrocarbons, such as benzene, xylene, and toluene, and aliphatic hydrocarbon mixtures typified by normal heptane and mineral spirits. These solvents may be used alone or in combination.

When the coating composition that contains a solvent is cured with an active energy ray, the coating composition is preferably subjected to the process of removing the solvent component before curing, by conducting preheating immediately after the coating composition is applied to the substrate. This process is to prevent the solvent component from acting as a curing inhibitor, which may cause insufficient curing of the coating film, when the coating composition is irradiated with an active energy ray while still containing the solvent.

The coating composition of the present invention may contain various additives according to the purpose. Examples of additives include stabilizers (e.g., polymerization inhibitors, such as hydroquinone, methoquinone, and methylhydroquinone), colorants, such as pigments (e.g., cyanine blue, disazo yellow, carmine 6b, lake red C, carbon black, and titanium white), fillers, viscosity modifiers, inorganic fillers, plasticizers, fillers, leveling agents, defoaming agents, flame retardants, organic monomers, and organic polymers. The coating composition of the present invention may contain these additives as long as they do not interfere with the effects of the present invention. Organic monomers include isocyanates typified by 4,4'-methylenediphenyl diisocyanate, toluene diisocyanate, and hexamethylene diisocyanate, and organic polymers include amino resins typified by melamine resin, benzoguanamine resin, and urea resin.

The coating composition of the present invention can be adjusted to a desired viscosity according to its use. For example, the viscosity of the coating composition for use as an ink for lithographic printing (offset printing) is preferably in the range of 30 to 100 Pa·s; the viscosity for use as an ink for stencil (screen) printing is preferably in the range of 2 to 10 Pa·s; the viscosity for use as an ink for letterpress (flexo) printing is preferably in the range of 0.1 to 0.2 Pa·s; and the viscosity for use as an ink for intaglio (gravure) printing is preferably in the range of 0.05 to 0.2 Pa·s. Because the coating composition of the present invention can be suitably adjusted to a viscosity in the range of 30 to 100 Pa·s, for example, it is particularly suitable for use as an ink for lithographic printing (offset printing), which requires a higher viscosity than an ink for inkjet printing. The viscosity can be adjusted, for example, by adjusting the type and the content of the acrylate composition (A-2), the solvent, and the like. It should be noted that the viscosity is the value measured using the method described in the examples.

The coating composition of the present invention is applied to a substrate and cured to obtain a cured product. Examples of substrates include paper, yarns, fibers, fabrics, leathers, metals, plastics, glass, wood, ceramics, and composite materials thereof. From the viewpoint of processability, preferred are plastic substrates (e.g., polypropylene (PP), polyethylene (PE), polycarbonate (PC), polyvinyl chloride (PVC), polyethylene terephthalate (PET), and acrylic (e.g., PMMA)) or metals (e.g., iron sheets, steel sheets, aluminum sheets, stainless steel sheets, or coated sheets thereof, ceramic coated sheets, copper sheets, tin sheets, and zinc sheets).

Any commonly used methods of applying the coating composition to the substrate can be used without limitation. Examples include spray coating, dip coating, spin coating, brush coating, roller coating, and using a dispenser. The above-described printing methods may also be employed. The thickness of the coating film applied to the substrate may be adjusted as appropriate.

The method of curing the coating film applied to the substrate may be either one of curing with heat and curing with an active energy ray. The curing may be conducted in the order of subjecting the coating film to curing with heat, followed by curing with an active energy ray, or subjecting the coating film to curing with an active energy ray, followed by curing with heat. If the coating composition contains a solvent as described above, the solvent in the coating composition needs to be removed (evaporated) before curing. Thus, it is preferred to use the method of curing the coating film with heat only, or the method of subjecting the coating film to curing with heat, followed by curing with an active energy ray.

When an active energy ray is used to cure the coating composition, the active energy ray to be used is not limited, and may be any that can apply the energy required for the curing reaction of the base resin (A) in the coating composition to proceed, for example, ultraviolet ray, electron beam, α ray, β ray, γ ray, or X-ray. In particular, when a high-energy light source is used, the polymerization reaction can proceed without using an active energy ray-curing polymerization initiator. In the case of ultraviolet irradiation, mercury-free ultraviolet irradiation is strongly desired in view of environmental protection, and the replacement with a GaN-based semiconductor ultraviolet light-emitting device is industrially and environmentally very useful. An ultraviolet light-emitting diode (UV-LED) and an ultraviolet laser diode (UV-LD), which have small size, long life, high efficiency, and low cost, are preferred ultraviolet light sources.

When heat is used to cure the coating composition, the curing reaction proceeds by heat-treating the coating film applied onto the substrate. The heat-treatment method may be any that can efficiently heat the coating film applied onto the substrate. Examples of heat-treatment methods include heating in a drying oven in which a heated gas is circulated or convected in the air or a desired atmosphere; heating using electromagnetic waves, such as an infrared heater; and heating by bringing the film into contact with a heated metal or ceramic material. The curing temperature in the heat treatment may be selected appropriately according to the base resin (A) used, the boiling point of the solvent that is optionally used, and the heat-resistant temperature of the substrate (particularly when a film is used); for example, the curing temperature is preferably 90°C or more, while it is preferably 200°C or less, and more preferably 180°C or less. The curing time is preferably 10 to 150 minutes.

The present invention will be hereinafter described in more detail with reference to examples; however, the present invention is in no way limited to the examples.

The materials used in the following examples and comparative examples will be hereinafter described.

### Alkyd Resin (a-1)

ARAKYD 8012 manufactured by Arakawa Chemical Industries, Co., Ltd., which is a phthalic acid-based alkyd resin, was placed in a 60°C environment to remove xylene, and used as a base resin 1.

### Acrylate Composition (a-2)

50 parts by weight of butyl acrylate-methyl methacrylate copolymer (weight average molecular weight: 500,000) and 40 parts by weight of isobornyl acrylate as acrylates were used as a base resin 2. In the following examples and comparative examples, when the base resin 2 was used, it was pre-mixed with 10 parts by weight of 1-hydroxy-cyclohexyl-phenyl-ketone (Irgacure 184 manufactured by IGM Resins B.V.) as an active energy ray-curing polymerization initiator.

### Polyester Resin

Polyester resins were synthesized in the below-described polymerization examples, using the following materials:
tetrahydrophthalic anhydride (hereafter THPA, RIKACID TH manufactured by New Japan Chemical Co., Ltd.)
hydrogenated bisphenol A (hereinafter HBPA, manufactured by TCI)
1,3-butanediol (hereinafter BG, manufactured by FUJIFILM Wako Pure Chemical Corporation)

### Solvent

### Methyl ethyl ketone (hereafter MEK, manufactured by FUJIFILM Wako Pure Chemical Corporation)

### Polymerization Example 1: synthesis of polyester resins 1 to 4

In a 2,000-ml cylindrical round-bottomed flask, 520 g of THPA was placed, heated to 100°C and melted. The temperature was elevated to 150°C, and under 200 ml/min of nitrogen and rotation at 100 rpm, 400 g of HBPA was added in four divided portions. After the dissolution of the powder was visually confirmed, the heater temperature was elevated to 180°C to allow the water to distill off under rotation at 150 rpm, and, after dropping of liquid was confirmed, 600 g of HPBA was added in six divided portions while sampling was being performed every 30 minutes to measure the number average molecular weight and the acid value. After the addition and reaction, when the intended number average molecular weight and acid value were achieved, 350 g of the reaction product was sampled, and thereafter while the reaction and the sampling was being continued, the following four types of resins were produced.

As a product of 10 hours of polymerization after dropping of liquid was confirmed, a polyester resin 1 with a number average molecular weight of 900, an acid value of 150, and an HBPA content of 100 mol% in the polyhydric alcohol was obtained.

As a product of 13 hours of polymerization after dropping of liquid was confirmed, a polyester resin 2 with a number average molecular weight of 1,100, an acid value of 105, and an HBPA content of 100% in the polyhydric alcohol was obtained.

As a product of 18 hours of polymerization after dropping of liquid was confirmed, a polyester resin 3 with a number average molecular weight of 1,500, an acid value of 30, and an HBPA content of 100 mol% in the polyhydric alcohol was obtained.

As a product of 30 hours of polymerization after dropping of liquid was confirmed, a polyester resin 4 with a number average molecular weight of 2,500, an acid value of 15, and an HBPA content of 100% in the polyhydric alcohol was obtained.

### Polymerization Example 2: synthesis of polyester resin 5

In a 500-ml cylindrical round-bottomed flask, 150 g of THPA was placed, heated to 100°C and melted. The temperature was elevated to 150°C, and under 200 ml/min of nitrogen and rotation at 100 rpm, 70 g of BG was added. After the dissolution was visually confirmed, the heater temperature was elevated to 200°C to allow the water to distill off under rotation at 150 rpm, and, after dropping of liquid was confirmed, a total of 90 g of HPBA was added and reacted while sampling was being performed every 30 minutes to measure the number average molecular weight and the acid value. The reaction was stopped when the intended number average molecular weight and acid value were achieved. As a result, 202 g of a polyester resin 5 with a number average molecular weight of 1,250, an acid value of 32, and an HBPA content of 20 mol% in the polyhydric alcohol was obtained.

### Polymerization Example 3: synthesis of polyester resin 6

In a 500-ml cylindrical round-bottomed flask, 230 g of THPA was placed, heated to 100°C and melted. The temperature was elevated to 150°C, and under 200 ml/min of nitrogen and rotation at 100 rpm, 135 g of BG was added. After the dissolution was visually confirmed, the heater temperature was elevated to 200°C to allow the water to distill off under rotation at 150 rpm, and, after dropping of liquid was confirmed, a total of 70 g of HPBA was added and reacted while sampling was being performed every 30 minutes to measure the number average molecular weight and the acid value. The reaction was stopped when the intended number average molecular weight and acid value were achieved. As a result, 254 g of a polyester resin 6 with a number average molecular weight of 1,050, an acid value of 34, and an HBPA content of 16 mol% in the polyhydric alcohol was obtained.

For comparative examples, ELITEL UE3350 manufactured by UNITIKA (comparative polyester resin; number average molecular weight 5,000, acid value: 1) was used.

Physical property values of each synthesized polyester resin were measured using the following measurement methods.

### (1) GPC Measurement Conditions

The number average molecular weight was measured by gel permeation chromatography (GPC) under the following conditions, using a standard polystyrene calibration curve.
Equipment: Prominence-i, LC-2030 manufactured by Shimadzu Corporation
Column: Shodex LF-804 × 2, Guard column S
Mobile phase: THF
Flow rate: 1.0 ml/min
Injection volume: 50 µl
Column temperature: 40°C

### (2) Measurement of Acid Value

1.5 g of a solid or liquid polyester resin was weighed out in an Erlenmeyer flask, and dissolved in about 10 ml of a solvent (toluene/methanol = 7/3 (volume ratio)) added thereto. Then, three drops of an indicator (1% phenolphthalein/ethyl alcohol solution) were added and the solution was titrated with 0.1 N potassium hydroxide solution, until the end point at which the solution color changed from white to pink, and the acid value was calculated based on the following equation:
Acid value (mg KOH/g) = A × F/S, where
F: factor of 0.1 N potassium hydroxide solution (f × 5.61), f = 1,
V: titration volume (ml) of 0.1 N potassium hydroxide solution, and
W: sample weight (g).

To prepare coating compositions to be cured with heat or an active energy ray, the base resins, the polyester resins, and the solvent were blended in the amounts shown in Tables 1 to 3 (the values for the compositions in the tables are in parts by weight), and the mixtures were placed in a container equipped with a disper and stirred with heating at 40°C until they turned transparent when visually observed. Coating compositions were thus obtained.

### Curing with Heat (Examples 1-10 and Comparative Examples 1-4)

An aluminum substrate (aluminum foil manufactured by TOYO ALUMINIUM EKCO PRODUCTS Co., Ltd., thickness: 60 µm) and a steel sheet substrate (SECC manufactured by Kyoho Corporation, thickness: 300 µm) were prepared as substrates, and each coating composition was applied to the substrates using a bar coater and dried at 60°C for 10 minutes to form coating films with a thickness of 6 ± 1 µm. Then, the coating films were heat-treated and baked at 160°C for 30 minutes using HISPEC HT-210 manufactured by ETAC to produce heat-cured coating films. The coating films thus obtained were subjected to the tests described below. Table 1 shows the evaluation results for the aluminum substrate, and Table 2 shows the evaluation results for the steel sheet.

### Curing with Active Energy Ray Irradiation (Examples 11-15 and Comparative Examples 5-6)

A polypropylene substrate (P2161 manufactured by TOYOBO, biaxially oriented polypropylene, corona-treated) was prepared as a substrate, and each coating composition was applied to the substrate using a bar coater and dried at 60°C for 10 minutes to form a coating film with a thickness of 6 ± 1 µm. Then, the coating film was irradiated at 200 mJ/cm² using a metal halide light source to prepare a photocured coating film. The coating film thus obtained was subjected to the tests described below. Table 3 shows the evaluation results.

### (3) Tape Peel Test

Cellophane tape manufactured by NICHIBAN was applied to the coating film and rubbed strongly with a finger, and then removed. The condition of the coating film then was evaluated on a scale of 1 to 5 as follows. Tables 1 to 3 show the evaluation results.
5: Not peeled off when rapidly removed.
4: 50% peeled off when rapidly removed; the substrate peeled off although not drawn by the tape.
3: Completely peeled off when rapidly removed, although not peeled off when slowly removed.
2: 50% peeled off when slowly removed.
1: Completely peeled off when slowly removed.

### (4) Bending Resistance Test

Each substrate with a coating film was cut to a size of 100 mm × 50 mm, and bent 90 degrees with a 4-mm-diameter mandrel rod being placed on the center of the substrate. The substrate with a coating film then was visually evaluated as ○ or × for chipping and cracking of the coating film.
○ : No chipping and cracking of the coating film
× : Chipping and cracking of the coating film
Tables 1 to 3 show the evaluation results.

**[Table 1]**

| | Comparative Example | Example | Example | Example | Example | Example | Comparative Example |
|---|---|---|---|---|---|---|---|
| | 1 | 1 | 2 | 3 | 4 | 5 | 2 |
| Base resin 1 | 60 | 60 | 60 | 60 | 60 | 60 | 60 |
| Comparative polyester resin | 40 | | | | | | |
| Polyester resin 1 | | 40 | | | | | |
| Polyester resin 2 | | | 40 | | | | |
| Polyester resin 3 | | | | 40 | | | |
| Polyester resin 4 | | | | | 40 | | |
| Polyester resin 5 | | | | | | 40 | |
| Polyester resin 6 | | | | | | | 40 |
| Solvent | 100 | 100 | 100 | 100 | 100 | 100 | 100 |
| Curing method | Heat treatment | | | | | | |
| Substrate | Aluminum | | | | | | |
| Number average molecular weight | 5,000 | 900 | 1100 | 1500 | 2500 | 1250 | 1050 |
| Acid value | 1 | 150 | 105 | 30 | 15 | 32 | 34 |
| HBPA (mol%) in polyhydric alcohol | 0 | 100 | 100 | 100 | 100 | 20 | 16 |
| Tape peel test | 3 | 5 | 5 | 5 | 5 | 5 | 3 |
| Bending resistance test | × | ○ | ○ | ○ | ○ | ○ | × |

**[Table 2]**

| | Comparative Example | Example | Example | Example | Example | Example | Comparative Example | |
|---|---|---|---|---|---|---|---|---|
| | 3 | 6 | 7 | 8 | 9 | 10 | 4 | |
| Base resin 1 | 60 | 60 | 60 | 60 | 60 | 60 | 60 | |
| Comparative polyester resin | 40 | | | | | | | |
| Polyester resin 1 | | 40 | | | | | | |
| Polyester resin 2 | | | 40 | | | | | |
| Polyester resin 3 | | | | 40 | | | | |
| Polyester resin 4 | | | | | 40 | | | |
| Polyester resin 5 | | | | | | 40 | | |
| Polyester resin 6 | | | | | | | 40 | |
| Solvent | 100 | 100 | 100 | 100 | 100 | 100 | 100 | |
| Curing method | Heat treatment | | | | | | | |
| Substrate | Steel sheet | | | | | | | |
| Number average molecular weight | 5,000 | 900 | 1100 | 1500 | 2500 | 1250 | 1050 | |
| Acid value | 1 | 150 | 105 | 30 | 15 | 32 | 34 | |
| HBPA (mol%) in polyhydric alcohol | 0 | 100 | 100 | 100 | 100 | 20 | 16 | |
| Tape peel test | 3 | 5 | 5 | 5 | 5 | 5 | 3 | |
| Bending resistance test | × | ○ | ○ | ○ | ○ | ○ | × | |

**[Table 3]**

| | Comparative Example | Example | Example | Example | Example | Example | Comparative Example |
|---|---|---|---|---|---|---|---|
| | 5 | 11 | 12 | 13 | 14 | 15 | 6 |
| Base resin 2 | 60 | 60 | 60 | 60 | 60 | 60 | 60 |
| Comparative polyester resin | 40 | | | | | | |
| Polyester resin 1 | | 40 | | | | | |
| Polyester resin 2 | | | 40 | | | | |
| Polyester resin 3 | | | | 40 | | | |
| Polyester resin 4 | | | | | 40 | | |
| Polyester resin 5 | | | | | | 40 | |
| Polyester resin 6 | | | | | | | 40 |
| Solvent | 100 | 100 | 100 | 100 | 100 | 100 | 100 |
| Curing method | Active energy ray irradiation | | | | | | |
| Substrate | Polypropylene | | | | | | |
| Number average molecular weight | 5,000 | 900 | 1100 | 1500 | 2500 | 1250 | 1050 |
| Acid value | 1 | 150 | 105 | 30 | 15 | 32 | 34 |
| HBPA (mol%) in polyhydric alcohol | 0 | 100 | 100 | 100 | 100 | 20 | 16 |
| Tape peel test | 3 | 5 | 5 | 5 | 5 | 5 | 3 |
| Bending resistance test | × | ○ | ○ | ○ | ○ | ○ | × |

As shown in Comparative Examples 1, 3, and 5 in Tables 1, 2, and 3, respectively, when using coating compositions containing the comparative polyester resin, because of the rigid structure of the comparative polyester resin, the coating films peeled off easily in the tape peel test, and also chipped upon bending.

As shown in the examples in Tables 1 to 3, when using coating compositions containing a polyester resin in which an optimal ratio of HBPA was incorporated in the molecular structure, the coating films exhibited adhesion to withstand tape peeling, and bending resistance. As shown in Comparative Examples 2, 4, and 6 in Tables 1, 2, and 3, respectively, when using coating compositions containing a polyester resin in which less than 20 mol% of HBPA was incorporated in the molecular structure, because of the low HBPA fraction, the coating films failed to exhibit sufficient adhesion to the substrates, and peeled off easily in the tape peel test. Similarly upon bending, the coating films cracked because of the poor substrate adhesion.

### Examples 16-20, and Comparative Examples 7 and 8

Coating compositions of the compositions shown in Table 4 below were prepared, and the properties of the coating compositions were evaluated.

**[Table 4]**

| | Comparative Example | Comparative Example | Example | Example | Example | Example | Example |
|---|---|---|---|---|---|---|---|
| | 7 | 8 | 16 | 17 | 18 | 19 | 20 |
| DTMPTA | 50 | 50 | 50 | 50 | 50 | 50 | 50 |
| AUA | 40 | 40 | 40 | 40 | 40 | 40 | 40 |
| Comparative polyester | 10 | | | | | | |
| Polyester resin 1 | | | 10 | | | | |
| Polyester resin 2 | | | | 10 | | | |
| Polyester resin 3 | | | | | 10 | | |
| Polyester resin 4 | | | | | | 10 | |
| Polyester resin 5 | | | | | | | 10 |
| Polyester resin 6 | | 10 | | | | | |
| Polymerization initiator | 10 | 10 | 10 | 10 | 10 | 10 | 10 |
| Viscosity (Pa·s) at room temperature | 80 | 55 | 50 | 55 | 57 | 66 | 56 |

The components other than the polyester resins 1 to 6 shown in Table 4 are as follows. The amounts in the compositions shown in Table 4 are in parts by weight.
DTMPTA; ditrimethylolpropane tetraacrylate (SR355 manufactured by Sartomer)
AUA: aromatic urethane acrylate (CN9782 manufactured by Sartomer)
Comparative polyester; ELITEL UE3350 manufactured by UNITIKA
Polymerization initiator; 2-methyl-1-[4-(methylthio)phenyl)-2-morpholino-1-propanone (Omnirad 907 manufactured by IGM Resins B.V.)

### (5) Preparation of Coating Compositions

Coating compositions were prepared by blending the components in the amounts listed in Tables 4, 6, 8, 10, and 12, and mixing with heating to 100°C.

### (6) Measurement of Viscosity

The viscosity of each coating composition was measured using a Brookfield digital viscometer DV-2 +PRO, a so-called B-type viscometer, by reading the viscosity at 1 rpm under 2° cone-plate and room temperature (25°C).

### (7) Adhesion Test

Samples for the adhesion test were prepared by blending the components shown in Table 4, and placing the mixtures in a container equipped with a disper and stirring with heating at 80°C until they turned transparent when visually observed. The samples prepared for the adhesion test were each coated onto a polypropylene substrate (P2161 manufactured by TOYOBO, biaxially oriented polypropylene, corona-treated) to a thickness of 6 ± 1 µm using a bar coater, and irradiated using a metal halide light source under conditions to make the coating film tack-free, i.e., a distance of 20 mm, an output of 160 W/m, and a cumulative dose of 200 mJ/cm², to obtain a cured coating film. The UV curing equipment was chamber-type UV curing equipment, VB-40205BY manufactured by USHIO.

The adhesion was evaluated using the tape peel test. Cellophane tape manufactured by NICHIBAN was applied to the cured coating film and rubbed strongly with a finger, and then removed. The condition of the cured coating film then was evaluated on a scale of 1 to 5 as follows. Table 5 shows the evaluation results.
5: Not peeled off when rapidly removed.
4: 50% peeled off when rapidly removed; the substrate peeled off although not drawn by the tape.
3: Completely peeled off when rapidly removed, although not peeled off when slowly removed.
2: 50% peeled off when slowly removed.
1: Completely peeled off when slowly removed.

### (8) Bending Resistance Test

Each substrate with a coating film prepared in (7) above was cut to a size of 100 mm × 50 mm, and bent 90 degrees with a 4-mm-diameter mandrel rod being placed on the center of the substrate. The substrate with a coating film then was visually evaluated as ○ or × for chipping and cracking of the coating film.
○ : No chipping and cracking of the coating film
× : Chipping and cracking of the coating film

**[Table 5]**

| | Comparative Example | Comparative Example | Example | Example | Example | Example | Example |
|---|---|---|---|---|---|---|---|
| | 7 | 8 | 16 | 17 | 18 | 19 | 20 |
| Tape peel test | 3 | 3 | 5 | 5 | 5 | 5 | 5 |
| Bending resistance test | × | × | ○ | ○ | ○ | ○ | ○ |

Table 5 shows the results when the coating compositions adjusted to a viscosity in the range of 30 to 100 Pa·s (viscosity suitable for offset (lithographic) printing) were printed on the polypropylene substrate and cured. As shown in Comparative Example 7, when using the coating composition containing the comparative polyester resin, because of the rigid structure of the comparative polyester resin, the cured coating film peeled off easily in the tape peel test. As shown in Comparative Example 8, when using the coating composition containing a polyester resin in which less than 20 mol% of HBPA was incorporated in the molecular structure, because of the low HBPA fraction, the cured coating film failed to exhibit sufficient adhesion to the substrate, and peeled off easily in the tape peel test. Similarly upon bending, the coating films cracked and chipped because of the poor substrate adhesion.

As shown in Examples 16 to 20, the cured coating films of the coating compositions containing a polyester resin in which an optimal ratio of HBPA was incorporated in the molecular structure exhibited adhesion to withstand tape peeling, and bending resistance.

### Examples 21-25 and Comparative Examples 9 and 10

Coating compositions of the compositions shown in Table 6 below were prepared, and the properties of the coating compositions were evaluated.

**[Table 6]**

| | Comparative Example | Comparative Example | Example | Example | Example | Example | Example |
|---|---|---|---|---|---|---|---|
| | 9 | 10 | 21 | 22 | 23 | 24 | 25 |
| DTMPTA | 50 | 50 | 50 | 50 | 50 | 50 | 50 |
| AUA | 40 | 40 | 40 | 40 | 40 | 40 | 40 |
| Comparative polyester | 10 | | | | | | |
| Polyester resin 1 | | | 10 | | | | |
| Polyester resin 2 | | | | 10 | | | |
| Polyester resin 3 | | | | | 10 | | |
| Polyester resin 4 | | | | | | 10 | |
| Polyester resin 5 | | | | | | | 10 |
| Polyester resin 6 | | 10 | | | | | |
| Polymerization initiator | 10 | 10 | 10 | 10 | 10 | 10 | 10 |
| Viscosity (Pa·s) at room temperature | 80 | 55 | 50 | 55 | 57 | 66 | 56 |

The components other than the polyester resins 1 to 6 shown in Table 6 are as follows. The amounts in the compositions shown in Table 6 are in parts by weight.
DTMPTA; ditrimethylolpropane tetraacrylate (SR355 manufactured by Sartomer)
AUA: aromatic urethane acrylate (CN9782 manufactured by Sartomer)
Comparative polyester; ELITEL UE3350 manufactured by UNITIKA
Polymerization initiator; 2-methyl-1-[4-(methylthio)phenyl)-2-morpholino-1-propanone (Omnirad 907 manufactured by IGM Resins B.V.)

### Tape Peel Test

Samples were prepared as in Examples 16 to 20, except that an aluminum substrate (aluminum foil manufactured by TOYO ALUMINIUM EKCO PRODUCTS Co., Ltd.) was used as the substrate, and the adhesion test was conducted. Table 7 shows the results.

### Bending Resistance Test

Samples were prepared as in Examples 16 to 20, except that an aluminum substrate (aluminum foil manufactured by TOYO ALUMINIUM EKCO PRODUCTS Co., Ltd.) was used as the substrate, and the bending resistance test was conducted. Table 7 shows the results.

**[Table 7]**

| | Comparative Example | Comparative Example | Example | Example | Example | Example | Example |
|---|---|---|---|---|---|---|---|
| | 9 | 10 | 21 | 22 | 23 | 24 | 25 |
| Tape peel test | 3 | 3 | 5 | 5 | 5 | 5 | 5 |
| Bending resistance test | × | × | ○ | ○ | ○ | ○ | ○ |

Table 7 shows the results when the coating compositions adjusted to a viscosity in the range of 30 to 100 Pa·s (for offset (lithographic) printing) were printed on the aluminum substrate and cured. As shown in Comparative Example 9, when using the coating composition containing the comparative polyester resin, because of the rigid structure of the comparative polyester resin, the cured coating film peeled off easily in the tape peel test. As shown in Comparative Example 10, when using the coating composition containing a polyester resin in which less than 20 mol% of HBPA was incorporated in the molecular structure, because of the low HBPA fraction, the cured coating film failed to exhibit sufficient adhesion to the substrate, and peeled off easily in the tape peel test. Similarly upon bending, the coating film cracked and chipped because of the poor substrate adhesion.

As shown in Examples 21 to 25, the cured coating films of the coating compositions containing a polyester resin in which an optimal ratio of HBPA was incorporated in the molecular structure exhibited adhesion to withstand tape peeling, and bending resistance.

### Examples 26-27 and Comparative Examples 11-14

Coating compositions of the compositions shown in Table 8 below were prepared, and the properties of the coating compositions were evaluated.

**[Table 8]**

| | Comparative Example | Comparative Example | Comparative Example | Comparative Example | Example | Example |
|---|---|---|---|---|---|---|
| | 11 | 12 | 13 | 14 | 26 | 27 |
| EO-BPADA | 40 | 40 | 40 | 40 | 40 | 40 |
| PETA | 40 | 40 | 40 | 40 | 40 | 40 |
| Comparative polyester | 20 | 20 | | | | |
| Polyester resin 3 | | | | | 20 | 20 |
| Polyester resin 6 | | | 20 | 20 | | |
| Substrate | PP | Al | PP | Al | PP | Al |
| Polymerization initiator | 10 | 10 | 10 | 10 | 10 | 10 |
| Viscosity (Pa·s) at room temperature | 4 | 4 | 2.2 | 2.2 | 2.5 | 2.5 |

The components other than the polyester resins 3 and 6 shown in Table 8 are as follows. The amounts in the compositions shown in Table 8 are in parts by weight.
EO-BPADA; ethylene oxide-modified hydrogenated bisphenol A diacrylate (SR349NS manufactured by Sartomer)
PETA; pentaerythritol triacrylate (LIGHT ACRYLATE PE-3A manufactured by KYOEISHA CHEMICAL Co., Ltd.)
Comparative polyester; ELITEL UE3350 manufactured by UNITIKA
Polymerization initiator; 2-methyl-1-[4-(methylthio)phenyl)-2-morpholino-1-propanone (Omnirad 907 manufactured by IGM Resins B.V.)
Substrates; PP (polypropylene substrate) and Al (aluminum substrate)

### Tape Peel Test

Samples for the adhesion test were prepared by blending the components shown in Table 8, and placing the mixtures in a container equipped with a disper and stirring with heating at 80°C until they turned transparent when visually observed. The samples prepared for the adhesion test were each printed onto a polypropylene substrate (P2161 manufactured by TOYOBO, biaxially oriented polypropylene, corona-treated) or an aluminum substrate (aluminum foil manufactured by TOYO ALUMINIUM EKCO PRODUCTS Co., Ltd.) to a thickness of 6 ± 1 µm using a screen printing machine (MT-320 manufactured by Micro-Tech), and irradiated using a metal halide light source under conditions to make the coating film tack-free, i.e., a distance of 20 mm, an output of 160 W/m, and a cumulative dose of 200 mJ/cm², to obtain a cured coating film for the tape peel test. The UV curing equipment was box-type UV curing equipment manufactured by USHIO. The adhesion test was conducted as in Example 16. Table 9 shows the results.

### Bending Resistance Test

The bending resistance test was conducted as described above. Table 9 shows the results.

**[Table 9]**

| | Comparative Example | Comparative Example | Comparative Example | Comparative Example | Example | Example |
|---|---|---|---|---|---|---|
| | 11 | 12 | 13 | 14 | 26 | 27 |
| Tape peel test | 3 | 3 | 3 | 3 | 5 | 5 |
| Bending resistance test | × | × | × | × | ○ | ○ |

Table 9 shows the results when the coating compositions adjusted to a viscosity in the range of 2 to 10 Pa·s (viscosity suitable for screen (stencil) printing) were printed on the polypropylene substrate or aluminum substrate and cured. As shown in Comparative Examples 11 and 12, when using the coating compositions containing the comparative polyester resin, because of the rigid structure of the comparative polyester resin, the cured coating films peeled off easily in the tape peel test. As shown in Comparative Examples 13 and 14, when using the coating compositions containing a polyester resin in which less than 20 mol% of HBPA was incorporated in the molecular structure, because of the low HBPA fraction, the cured coating films failed to exhibit sufficient adhesion to the substrate, and peeled off easily in the tape peel test. Similarly upon bending, the coating films cracked and chipped because of the poor substrate adhesion.

As shown in Examples 26 and 27, when using the coating compositions containing a polyester resin in which an optimal ratio of HBPA was incorporated in the molecular structure, the cured coating films exhibited adhesion to withstand tape peeling, and bending resistance.

### Examples 28-29 and Comparative Examples 15-18

Coating compositions of the compositions shown in Table 10 below were prepared, and the properties of the coating compositions were evaluated.

**[Table 10]**

| | Comparative Example | Comparative Example | Comparative Example | Comparative Example | Example | Example |
|---|---|---|---|---|---|---|
| | 15 | 16 | 17 | 18 | 28 | 29 |
| PETA | 20 | 20 | 20 | 20 | 20 | 20 |
| DPGDA | 60 | 60 | 60 | 60 | 60 | 60 |
| Comparative polyester | 20 | 20 | | | | |
| Polyester resin 3 | | | | | 20 | 20 |
| Polyester resin 6 | | | 20 | 20 | | |
| Substrate | PP | Al | PP | Al | PP | Al |
| Polymerization initiator | 10 | 10 | 10 | 10 | 10 | 10 |
| Viscosity (Pa·s) at room temperature | 0.2 | 0.2 | 0.15 | 0.15 | 0.15 | 0.15 |

The components other than the polyester resins 3 and 6 shown in Table 10 are as follows.

The amounts in the compositions shown in Table 10 are in parts by weight.
PETA; pentaerythritol triacrylate (LIGHT ACRYLATE PE-3A manufactured by KYOEISHA CHEMICAL Co., Ltd.)
DPGDA; dipropylene diacrylate (APG-100 manufactured by SHIN-NAKAMURA CHEMICAL Co., Ltd.)
Comparative polyester; ELITEL UE3350 manufactured by UNITIKA
Polymerization initiator; 2-methyl-1-[4-(methylthio)phenyl)-2-morpholino-1-propanone (Omnirad 907 manufactured by IGM Resins B.V.)
Substrates; PP (polypropylene substrate) and Al (aluminum substrate)

### Tape Peel Test

Samples were prepared as in Examples 26 and 27, and the adhesion test was conducted. Table 11 shows the results.

### Bending Resistance Test

The bending resistance test was conducted as described above. Table 11 shows the results.

**[Table 11]**

| | Comparative Example | Comparative Example | Comparative Example | Comparative Example | Example | Example |
|---|---|---|---|---|---|---|
| | 15 | 16 | 17 | 18 | 28 | 29 |
| Tape peel test | 3 | 3 | 3 | 3 | 5 | 5 |
| Bending resistance test | × | × | × | × | ○ | ○ |

Table 11 shows the results when the coating compositions adjusted to a viscosity in the range of 0.1 to 0.2 Pa·s (viscosity suitable for flexo (letterpress) printing) were printed on the polypropylene substrate or aluminum substrate and cured. As shown in Comparative Examples 15 and 16, when using the coating compositions containing the comparative polyester resin, because of the rigid structure of the comparative polyester resin, the cured coating films peeled off easily in the tape peel test. As shown in Comparative Examples 15 and 16, when using the coating compositions containing a polyester resin in which less than 20 mol% of HBPA was incorporated in the molecular structure, because of the low HBPA fraction, the cured coating films failed to exhibit sufficient adhesion to the substrate, and peeled off easily in the tape peel test. Similarly upon bending, the coating films cracked and chipped because of the poor substrate adhesion.

As shown in Examples 28 and 29, when using the coating compositions containing a polyester resin in which an optimal ratio of HBPA was incorporated in the molecular structure, the cured coating films exhibited adhesion to withstand tape peeling, and bending resistance.

### Examples 30-31 and Comparative Examples 19-22

Coating compositions of the compositions shown in Table 12 below were prepared, and the properties of the coating compositions were evaluated.

**[Table 12]**

| | Comparative Example | Comparative Example | Comparative Example | Comparative Example | Example | Example |
|---|---|---|---|---|---|---|
| | 19 | 20 | 21 | 22 | 30 | 31 |
| DPGDA | 40 | 40 | 40 | 40 | 40 | 40 |
| TMPTA | 40 | 40 | 40 | 40 | 40 | 40 |
| Comparative polyester | 20 | 20 | | | | |
| Polyester resin 3 | | | | | 20 | 20 |
| Polyester resin 6 | | | 20 | 20 | | |
| Substrate | PP | Al | PP | Al | PP | Al |
| Polymerization initiator | 10 | 10 | 10 | 10 | 10 | 10 |
| Viscosity (Pa·s) at room temperature | 0.1 | 0.1 | 0.05 | 0.05 | 0.06 | 0.06 |

The components other than the polyester resins 3 and 6 shown in Table 12 are as follows.

The amounts in the compositions shown in Table 12 are in parts by weight.

DPGDA; dipropylene diacrylate (APG-100 manufactured by SHIN-NAKAMURA CHEMICAL Co., Ltd.)

TMPTA; trimethylolpropane tetraacrylate (LIGHT ACRYLATE TMP-A manufactured by KYOEISHA CHEMICAL Co., Ltd.)
Comparative polyester; ELITEL UE3350 manufactured by UNITIKA
Polymerization initiator; 2-methyl-1-[4-(methylthio)phenyl)-2-morpholino-1-propanone (Omnirad 907 manufactured by IGM Resins B.V.)
Substrates; PP (polypropylene substrate) and Al (aluminum substrate)

### Tape Peel Test

Samples were prepared as in Examples 26 and 27, and the adhesion test was conducted. Table 13 shows the results.

### Bending Resistance Test

The bending resistance test was conducted as described above. Table 13 shows the results.

**[Table 13]**

| | Comparative Example | Comparative Example | Comparative Example | Comparative Example | Example | Example |
|---|---|---|---|---|---|---|
| | 19 | 20 | 21 | 22 | 30 | 31 |
| Tape peel test | 3 | 3 | 3 | 3 | 5 | 5 |
| Bending resistance test | × | × | × | × | ○ | ○ |

Table 13 shows the results when the coating compositions adjusted to a viscosity in the range of 0.05 to 0.2 Pa·s (viscosity suitable for gravure (intaglio) printing) were printed on the polypropylene substrate or aluminum substrate and cured. As shown in Comparative Examples 19 and 20, when using the coating compositions containing the comparative polyester resin, because of the rigid structure of the comparative polyester resin, the cured coating films peeled off easily in the tape peel test. As shown in Comparative Examples 21 and 22, when using the coating compositions containing a polyester resin in which less than 20 mol% of HBPA was incorporated in the molecular structure, because of the low HBPA fraction, the cured coating films failed to exhibit sufficient adhesion to the substrate, and peeled off easily in the tape peel test. Similarly upon bending, the coating films cracked and chipped because of the poor substrate adhesion.

As shown in Examples 30 and 31, when using the coating compositions containing a polyester resin in which an optimal ratio of HBPA was incorporated in the molecular structure, the cured coating films exhibited adhesion to withstand tape peeling, and bending resistance.

### Industrial Applicability

The coating composition of the present invention can be used for various inks, varnishes, paints, and the like.

## Claims

1. A coating composition comprising a base resin (A) and a polyester resin (B), wherein
the polyester resin (B) contains a structural unit (b-1) derived from a polybasic acid and a structural unit (b-2) derived from a polyhydric alcohol,
the structural unit (b-2) derived from a polyhydric alcohol contains 20 mol% or more and 100 mol% or less of a structural unit derived from hydrogenated bisphenol A, and
the polyester resin (B) has a number average molecular weight of 500 to 4,500 and an acid value of 5 to 300.

2. The coating composition according to claim 1, wherein the base resin (A) is an alkyd resin (a-1) or an acrylate composition (a-2).

3. The coating composition according to claim 1 or 2, further comprising a polymerization initiator (C).

4. A cured product of the coating composition according to any one of claims 1 to 3.

5. A method for producing a cured product, comprising the step of applying the coating composition according to any one of claims 1 to 3, and irradiating the coating composition with an active energy ray.

6. A method for producing a cured product, comprising the step of applying the coating composition according to any one of claims 1 to 3, and heat-curing the coating composition.
